# EUROPÄISCHE PATENTSCHRIFT

(11) **EP 4 003 215 B1**
(45) Veröffentlichungstag und Bekanntmachung des Hinweises auf die Patenterteilung: **14.02.2024**
(21) Anmeldenummer: 20729667.4
(22) Anmeldetag: 26.05.2020
(51) Int. Cl.: A61C 3/02, A61C 3/06

(54) **DENTALSCHLEIFINSTRUMENT MIT ERHÖHTER STANDZEIT**
DENTAL POLISHING INSTRUMENT HAVING INCREASED SERVICE LIFE
INSTRUMENT DE POLISSAGE DENTAIRE AYANT UNE DURÉE DE VIE ACCRUE

(30) Priorität: 26.07.2019 DE 102019211163
(43) Veröffentlichungstag der Anmeldung: 01.06.2022
(73) Patentinhaber: Gebr. Brasseler GmbH & Co. KG, 32657 Lemgo (DE)
(72) Erfinder: KÜLLMER, Michael, 32657 Lemgo (DE)
(74) Vertreter: Hoefer & Partner Patentanwälte mbB
(86) Internationale Anmeldenummer: PCT/EP2020/064526
(87) Internationale Veröffentlichungsnummer: WO 2021/018434

(56) Entgegenhaltungen:
- US-A1- 2009 068 614
- US-B1- 6 383 238

## Beschreibung

Die Erfindung betrifft ein Dentalschleifinstrument zur Verwendung an Zähnen oder Zahnersatz wie z.B. Füllungen, Kronen, Brücken, Zahnimplantaten usw.

Bei der Bearbeitung von Zähnen oder Zahnersatz kommen auch Dentalschleifinstrumente in unterschiedlichster geometrischer Form zum Einsatz. Hierbei weisen die Dentalschleifinstrumente einen Schaft und einen Schleifbereich auf, welcher mit abrasiven Partikeln belegt ist. Diese Partikel können beispielsweise Diamantpartikel oder Hartmetallpartikel oder dergleichen sein. Ein derartiges Dentalschleifinstrument ist beispielsweise aus der DE 10 2017 202 407 A1 bekannt. Durch die Nutzung des Dentalschleifinstruments wird dieses abgenutzt, so dass nach einer gewissen Nutzungsdauer das Dentalschleifinstrument ersetzt werden muss. Hierbei wäre es wünschenswert, wenn eine Nutzungsdauer des Dentalschleifinstruments verlängert werden kann.

Aus US 2009/068614 A1 ist ein Dentalpolierinstrument mit abnehmbaren Polierkörper bekannt, welches zur Reduktion der Polierkörner eine Kombination aus Polierkörnern und kugeligen Harzpartikeln in einer Elastomermatrix verwendet.

US 6 383 238 B1 kommt nicht aus der Dentaltechnik und beschreibt eine harzgebundene Schleifschicht, welche unter anderem an Schleifscheiben oder Schleiftöpfen verwendet werden kann. Sie beschreibt die Kombination von hoch abrasiven Partikeln mit metallbeschichteten Kugeln aus amorphen Kohlenstoff, um die mechanischen, thermischen und Schmiereigenschaften der Schleifschicht zu verbessern.

Es ist daher Aufgabe der Erfindung, ein Dentalschleifinstrument bereitzustellen, welches bei einfachem Aufbau und einfacher, kostengünstiger Herstellbarkeit eine längere Standzeit und damit eine längere Nutzungsdauer aufweist.

Diese Aufgabe wird durch ein Dentalschleifinstrument mit den Merkmalen des Anspruches 1 gelöst. Die Unteransprüche zeigen bevorzugte Weiterbildungen der Erfindung.

Das erfindungsgemäße Dentalschleifinstrument mit den Merkmalen des Anspruches 1 weist demgegenüber den Vorteil auf, dass eine Standzeit und somit Lebensdauer des Dentalschleifinstruments im Vergleich mit den bisherigen verwendeten Dentalschleifinstrumenten signifikant verlängert ist. Dies wird erfindungsgemäß dadurch erreicht, dass das Dentalschleifinstrument einen Schaft und einen auf dem Schaft angeordneten Schleifbereich aufweist. Der Schleifbereich umfasst Schleifelemente, welche als Schleifkörner und Kugeln ausgebildet sind. Der Schleifbereich umfasst ferner eine Bindungsschicht, welche die Schleifelemente auf dem Schaft fixiert. Die Schleifelemente sind teilweise in die Bildungsschicht, welche auf dem Schaft aufgebracht ist, eingebettet und mittels der Bindungsschicht am Schaft fixiert.

Somit weist der Schleifbereich nicht nur Schleifkörner auf, sondern eine Mischung aus Schleifkörnern und Kugeln. Zwar reduzieren die Kugeln grundsätzlich die Anzahl der aktiven Schneiden, da ja die Anzahl der Schleifkörner reduziert ist, im Vergleich mit einem ausschließlich Schleifkörner umfassenden Schleifbereich. Allerdings ermöglichen die Kugeln durch die dadurch gewonnenen kleinen Zwischenräume am Schleifbereich eine Temperaturreduzierung, so dass eine Abnutzung der Schleifkörner signifikant reduziert wird. Dadurch wird die Lebensdauer der Schleifkörner und somit des Dentalschleifinstruments insgesamt deutlich verlängert.

Vorzugsweise ist ein Anteil der Kugeln an den Schleifelementen in einem Bereich von 15 Vol.% bis 45 Vol.-%. Vorzugsweise liegt der Anteil der Kugeln in einem Bereich von 20 Vol.-% bis 40 Vol.-%, weiter bevorzugt in einem Bereich von 25 Vol.-% bis 35 Vol.-%. Besonders bevorzugt ist der Anteil der Kugeln an den Schleifelementen 30 Vol.-%. Der Anteil der Schleifkörner ist jeweils der restliche Volumenanteil. D.h. wenn die Schleifelemente 30 Vol.-% Kugeln umfassen sind 70 Vol.-% Schleifkörner.

Eine weitere Steigerung der Standzeit des Dentalschleifinstruments wird erreicht, wenn die Kugeln vorzugsweise hohl ausgebildet sind. Die Verwendung von hohlen Kugeln ermöglicht somit eine weitere Verlängerung der Lebensdauer des Dentalschleifinstruments.

Die hohlen Kugeln weisen vorzugsweise eine Wandstärke in einem Bereich von 1/7 bis 1/5 des Kugeldurchmessers auf und haben besonders bevorzugt eine Wandstärke von ca. 1/6 des Kugeldurchmessers.

Gemäß einer weiteren bevorzugten Ausgestaltung der Erfindung ist ein erster Durchmesser der Kugeln immer kleiner als ein mittlerer zweiter Durchmesser der Schleifkörner.

Die Schleifkörner sind vorzugsweise Diamantkörner und/oder DLC-Körner und/oder Hartmetallkörner.

Weiter bevorzugt sind die Kugeln aus Keramik. Als Keramik wird besonders bevorzugt Aluminiumoxid verwendet. Anstatt von Aluminiumoxidkeramik kann bevorzugt auch Zirkonoxidkeramik oder ein Gemisch aus beiden Keramiken verwendet werden.

Eine besonders gute Fixierung der Schleifelemente am Schaft wird erhalten, wenn der Bindungsbereich Nickel umfasst. Die Nickelbildung kann durch einfache Herstellungsverfahren am Schaft vorgesehen werden und die Schleifelemente fixieren.

Die Kugeln sind weiter bevorzugt auf der Oberfläche des Schleifbereichs gleich verteilt. Hierdurch können insbesondere Hitzeinseln während der Bearbeitung vermieden werden, so dass eine gleichmäßige Abnutzung des Dentalschleifinstruments über die Zeit erfolgt.

Das erfindungsgemäße Dentalschleifinstrument ist somit geeignet, sowohl Zähne als auch Zahnersatz in jeglicher Form zu bearbeiten.

Nachfolgend wird ein bevorzugtes Ausführungsbeispiel der Erfindung unter Bezugnahme auf die begleitenden Zeichnungen im Detail beschrieben. In der Zeichnung ist:
- Fig. 1: eine schematische Ansicht eines Dentalschleifinstruments gemäß einem bevorzugten Ausführungsbeispiel der Erfindung,
- Fig. 2: eine schematische Schnittansicht des Schleifbereichs des Dentalschleifinstruments von Fig. 1,
- Fig. 3: eine theoretische, perspektivische Explosionsdarstellung des Schleifbereichs von Fig. 2 und
- Fig. 4: ein Diagramm, welches eine Schleifzeit t über einer Anzahl von Versuchen n eines Schleifversuchs über eine konstant gleiche Strecke im Vergleich mit zwei herkömmlichen Dentalschleifinstrumenten darstellt.

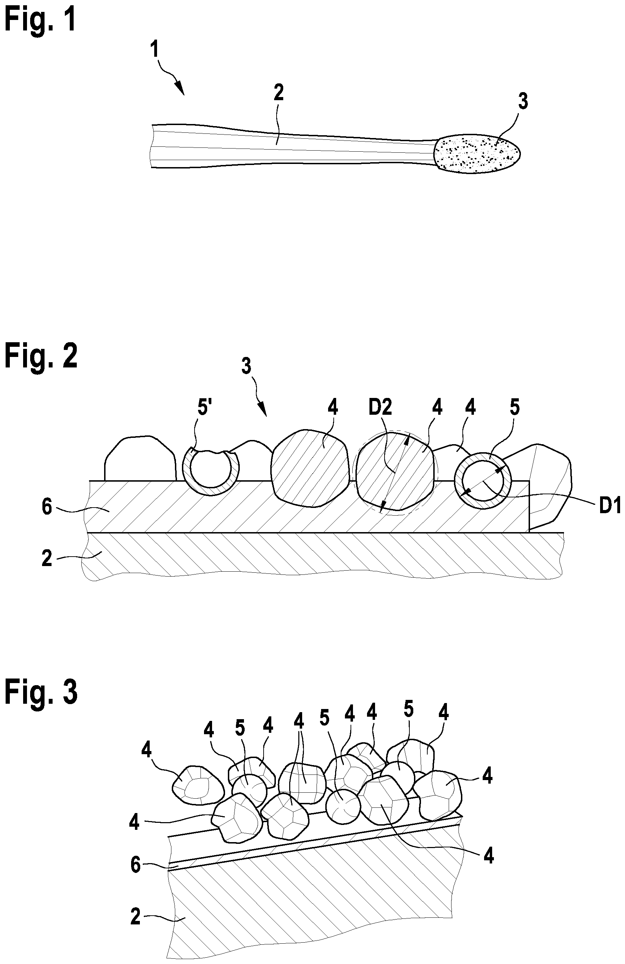

Nachfolgend wird unter Bezugnahme auf die Figuren 1 bis 4 ein Dentalschleifinstrument 1 gemäß einem bevorzugten Ausführungsbeispiel der Erfindung im Detail beschrieben.

Wie aus Fig. 1 ersichtlich ist, umfasst das Dentalschleifinstrument 1 einen Schaft 2 und einen Schleifbereich 3. Der Schleifbereich 3 ist auf dem Schaft 2 fixiert.

Wie im Detail aus Fig. 2 ersichtlich ist, umfasst der Schleifbereich 3 eine Bindungsschicht 6 sowie eine Vielzahl von Schleifelementen. Die Schleifelemente sind dabei teilweise in die Bindungsschicht 6, welche auf dem Schaft 2 aufgebracht ist, eingebettet und werden so auf dem Dentalschleifinstrument 1 fixiert.

Wie aus den Fig. 2 und 3 ersichtlich ist, umfassen die Schleifelemente hierbei Schleifkörner 4 und Kugeln 5. Weitere Schleifelemente sind nicht vorgesehen. In diesem Ausführungsbeispiel sind hierbei 30 Vol.-% Kugeln und 70 Vol.-% Schleifkörner vorgesehen.

Die Schleifkörner 4 sind Diamantkörner und die Kugeln 5 sind aus einer AluminiumoxidKeramik hergestellt.

Wie aus Fig. 2 ersichtlich ist, sind die Kugeln 5 dabei hohl ausgebildet. Hierbei ist ein erster Durchmesser D1 der Kugeln 5 kleiner als ein mittlerer zweiter Durchmesser D2 der Schleifkörner 4.

Dadurch ergeben sich größere Zwischenräume zwischen benachbarten Schleifkörnern 4, in denen Kugeln 5 angeordnet sind. Bei der Bearbeitung mit dem Dentalschleifinstrument kann somit eine Temperatur an der Oberfläche des Dentalschleifinstruments im Vergleich mit den bisher verwendeten Dentalschleifinstrumenten, welche ausschließlich Schleifkörner aufweisen, signifikant reduziert werden. Diese Temperaturreduzierung ermöglicht eine signifikante Verlängerung einer Standzeit des erfindungsgemäßen Dentalschleifinstruments.

In Fig. 2 ist schematisch mit dem Bezugszeichen 5' eine aufgebrochene Kugel bezeichnet. Bei der Bearbeitung der Oberfläche des Zahns oder dergleichen kann hierbei auch eine Beschädigung der Kugeln 5 auftreten. Eine derartige Beschädigung hat jedoch keinerlei Einfluss auf die abrasiven Eigenschaften der Schleifkörner 4.

Fig. 3 verdeutlicht nochmal in schematischer, perspektivischer Ansicht, wie die Schleifelemente, d.h. die Schleifkörner 4 und die Kugeln 5, auf dem Schaft 2 mittels der Bindungsschicht 6 fixiert werden.

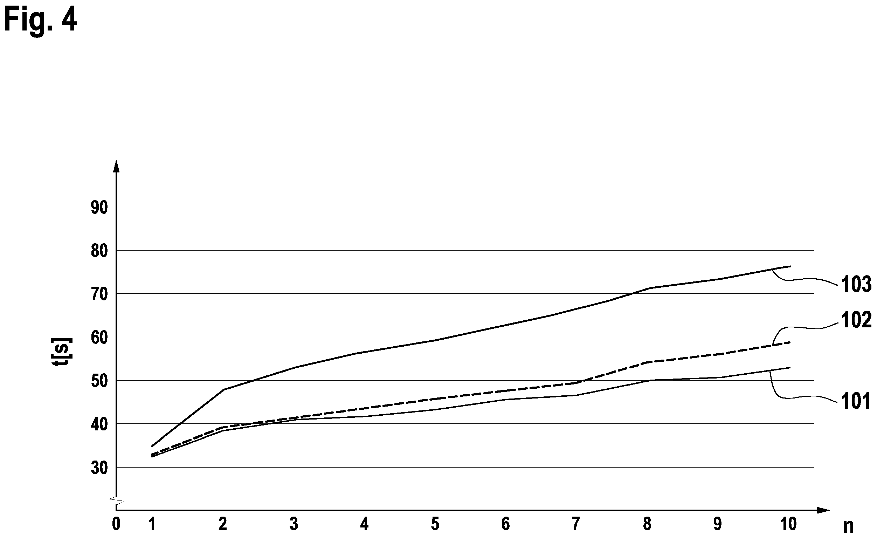

In Fig. 4 ist ein Diagramm gezeigt, welches einen Vergleich zwischen einem erfindungsgemäßen Dentalschleifinstrument und zwei herkömmlichen Dentalschleifinstrumenten zeigt. Bei dem Vergleichsversuch wurden die Dentalschleifinstrumente dabei über eine gewisse Anzahl n, in diesem Ausführungsbeispiel 10 mal, über eine vorbestimmte konstante Versuchsstrecke geführt und in Rotation betrieben. Hierbei ist für den jeweiligen Versuch eine Zeitdauer t in Sekunden bestimmt worden, in welcher das Dentalschleifinstrument über die vorbestimmte, konstante Strecke geführt werden muss, um eine vorbestimmte gleichbleibende Oberflächenqualität zu erhalten.

In Fig. 4 ist eine erste Kurve 101 für das erfindungsgemäße Dentalschleifinstrument 1 eingezeichnet. Als Vergleich ist eine zweite Kurve 102 für ein Dentalschleifinstrument des Standes der Technik eingezeichnet, welches einen speziellen Diamantbelag aufweist, der speziell für die Bearbeitung von Zirkonkeramiken entwickelt worden ist. Mit einer dritten Kurve 103 ist ein Verhalten eines Dentalschleifinstruments eingezeichnet, welches ausschließlich Diamantkörner als Schleifkörner aufweist.

Wie aus Fig. 4 ersichtlich ist, sind beim ersten Versuch (n = 1) die Standzeiten t im Bereich von 32 Sekunden (Kurven 101 und 102) bis 35 Sekunden (Kurve 103) sehr nahe beieinander. Mit zunehmender Anzahl der durchgeführten Versuche und damit einer einhergehenden Temperaturerhöhung am Dentalschleifinstrument ergeben sich jeweils für die zweite Kurve 102 und die dritte Kurve 103 signifikant längere Bearbeitungszeiten. Beispielsweise beim 10. Versuch (n = 10) benötigt das erfindungsgemäße Dentalschleifinstrument ungefähr 52 Sekunden. Das mit dem speziellen Diamantbelag für die Zirkonoxidbearbeitung belegte Dentalschleifinstrument benötigt ca. 58 Sekunden und das mit Diamantkörnern belegte Dentalschleifinstrument benötigt ca. 75 Sekunden.

Dieser Vergleich macht deutlich, dass eine signifikant erhöhte Standzeit des erfindungsgemäßen Dentalschleifinstruments 1 im Vergleich mit den herkömmlichen Dentalschleifinstrumenten, welche ausschließlich aus einer Art von Schleifkörnern bestehen, vorhanden ist.

Es sei ferner angemerkt, dass die geometrische Form des Schleifbereichs 3 des Dentalschleifinstruments 1 der Erfindung beliebig wählbar ist. In Fig. 1 ist eine Knospenform dargestellt. Die erfindungsgemäße Idee ist jedoch auch bei allen anderen geometrischen Formen wie Kegel, Zylinder, Kugeln, Keulen, Ellipsen, Scheiben usw. anwendbar.

### Bezugszeichenliste

- 1: Dentalschleifinstrument
- 2: Schaft
- 3: Schleifbereich
- 4: Schleifkörner
- 5: Kugel
- 5`: im Betrieb teilweise zerstörte Kugel
- 6: Bindungsschicht
- 101: erste Kurve eines erfindungsgemäßen Dentalschleifinstruments
- 102: zweite Kurve mit speziellem Diamantbelag des Standes der Technik
- 103: dritte Kurve mit ausschließlich Diamantkörnern
- D1: Durchmesser der Kugeln
- D2: mittlerer Durchmesser der Schleifkörner

## Patentansprüche

1. Dentalschleifinstrument, umfassend
- einen Schaft (2) und
- einen auf dem Schaft (2) angeordneten Schleifbereich (3),
- wobei der Schleifbereich (3) eine Bindungsschicht (6) und Schleifelemente umfassend Schleifkörner (4) und Kugeln (5) aufweist, und
- wobei die Schleifelemente teilweise in die Bindungsschicht, welche auf dem Schaft (2) aufgebracht ist, eingebettet sind und mittels der Bindungsschicht (6) am Schaft (2) fixiert sind.

2. Dentalschleifinstrument nach Anspruch 1, wobei ein Anteil der Kugeln (5) an den Schleifelementen in einem Bereich von 15 Vol.-% bis 45 Vol.-%, insbesondere 20 Vol.% bis 40 Vol.-%, weiter insbesondere in einem Bereich von 25 Vol.-% bis 35 Vol.-% und weiter insbesondere 30 Vol.-% beträgt.

3. Dentalschleifinstrument nach einem der vorhergehenden Ansprüche, wobei die Kugeln (5) hohl sind.

4. Dentalschleifinstrument nach Anspruch 3, wobei die Kugeln eine Wandstärke in einem Bereich von 1/7 eines ersten Durchmessers (D1) der Kugel (5) bis zu 1/5 des ersten Durchmessers (D1) der Kugel aufweisen.

5. Dentalschleifinstrument nach einem der vorhergehenden Ansprüche, wobei der erste Durchmesser (D1) der Kugeln (5) kleiner ist als ein zweiter mittlerer Durchmesser (D2) der Schleifkörner (4).

6. Dentalschleifinstrument nach einem der vorhergehenden Ansprüche, wobei die Schleifkörner (4) Diamantkörner und/oder DLC-Körner und/oder Hartmetallkörner sind.

7. Dentalschleifinstrument nach einem der vorhergehenden Ansprüche, wobei die Kugeln (5) aus Keramik hergestellt sind.

8. Dentalschleifinstrument nach Anspruch 7, wobei die Kugeln (5) aus Aluminiumoxid hergestellt sind, oder
wobei die Kugeln (5) aus Zirkonoxid hergestellt sind, oder
wobei die Kugeln (5) aus einer Mischkeramik umfassend Aluminiumoxid und Zirkonoxid hergestellt sind.

9. Dentalschleifinstrument nach einem der vorherigen Ansprüche, wobei die Bindungsschicht (6) Nickel umfasst.

10. Dentalschleifinstrument nach einem der vorhergehenden Ansprüche, wobei die Kugeln (5) auf einer Oberfläche des Schleifbereichs (3) gleich verteilt sind.

## Claims

1. Dental abrasive instrument, comprising
- a shaft (2) and
- an abrasive region (3) arranged on the shaft (2),
- wherein the abrasive region (3) comprises a bonding layer (6) and abrasive elements comprising abrasive particles (4) and spheres (5), and
- wherein the abrasive elements are partially embedded in the bonding layer, which is applied to the shaft (2), and are fixed to the shaft (2) by means of the bonding layer (6).

2. Dental abrasive instrument according to claim 1, wherein a proportion of the spheres (5) in the abrasive elements is in a range from 15 vol.% to 45 vol.%, in particular 20 vol.% to 40 vol.%, more particularly in a range from 25 vol.% to 35 vol.%, and more particularly 30 vol.%.

3. Dental abrasive instrument according to one of the preceding claims, wherein the spheres (5) are hollow.

4. Dental abrasive instrument according to claim 3, wherein the spheres have a wall thickness in a range from 1/7 of a first diameter (D1) of the sphere (5) to 1/5 of the first diameter (D1) of the sphere.

5. Dental abrasive instrument according to one of the preceding claims, wherein the first diameter (D1) of the spheres (5) is smaller than a second average diameter (D2) of the abrasive particles (4).

6. Dental abrasive instrument according to one of the preceding claims, wherein the abrasive particles (4) are diamond particles and/or DLC particles and/or hard metal particles.

7. Dental abrasive instrument according to one of the preceding claims, wherein the spheres (5) are made of ceramic material.

8. Dental abrasive instrument according to claim 7, wherein the spheres (5) are made of aluminium oxide, or
wherein the spheres (5) are made of zirconium oxide, or
wherein the spheres (5) are made of a mixed ceramic material comprising aluminium oxide and zirconium oxide.

9. Dental abrasive instrument according to one of the preceding claims, wherein the bonding layer (6) comprises nickel.

10. Dental abrasive instrument according to one of the preceding claims, wherein the spheres (5) are evenly distributed across a surface of the abrasive region (3).

## Revendications

1. Instrument de polissage dentaire comprenant :
- un manche (2) et
- une zone de polissage (3) disposée sur le manche (2),
- dans lequel la zone de polissage (3) présente une couche de liaison (6) et des éléments de polissage comprenant des grains de polissage (4) et des sphères (5), et
- dans lequel les éléments de polissage sont intégrés en partie dans la couche de liaison, laquelle est appliquée sur le manche (2) et sont bloqués sur le manche (2) au moyen de la couche de liaison (6).

2. Instrument de polissage dentaire selon la revendication 1, dans lequel une fraction des sphères (5) sur les éléments de polissage se situe dans une plage de 15 % en vol. à 45 % en vol., en particulier de 20 % en vol. à 40 % en vol., par ailleurs en particulier dans une plage de 25 % en vol. à 35 % en vol. et par ailleurs est en particulier de 30 % en vol.

3. Instrument de polissage dentaire selon l'une quelconque des revendications précédentes, dans lequel les sphères (5) sont creuses.

4. Instrument de polissage dentaire selon la revendication 3, dans lequel les sphères présentent une épaisseur de paroi dans un intervalle de 1/7 d'un premier diamètre (D1) des sphères (5) à 1/5 du premier diamètre (D1) des sphères.

5. Instrument de polissage dentaire selon l'une quelconque des revendications précédentes, dans lequel le premier diamètre (D1) des sphères (5) est inférieur à un deuxième diamètre moyen (D2) des grains abrasifs (4).

6. Instrument de polissage dentaire selon l'une quelconque des revendications précédentes, dans lequel les grains abrasifs (4) sont des grains en diamant et/ou des grains en DLC (en carbone de type diamant) et/ou des grains en métal dur.

7. Instrument de polissage dentaire selon l'une quelconque des revendications précédentes, dans lequel les sphères (5) sont fabriquées à partir de céramique.

8. Instrument de polissage dentaire selon la revendication 7, dans lequel les sphères (5) sont fabriquées à partir d'oxyde d'aluminium, ou
dans lequel les sphères (5) sont fabriquées à partir d'oxyde de zirconium, ou
dans lequel les sphères (5) sont fabriquées à partir d'une céramique mixte comprenant de l'oxyde d'aluminium et de l'oxyde de zirconium.

9. Instrument de polissage dentaire selon l'une quelconque des revendications précédentes, dans lequel la couche de liaison (6) comprend du nickel.

10. Instrument de polissage dentaire selon l'une quelconque des revendications précédentes, dans lequel les sphères (5) sont réparties de manière homogène sur une surface de la zone de polissage (3).
